# EUROPEAN PATENT APPLICATION

(11) **EP 4 749 127 A1**
(43) Date of publication of application: **27.05.2026**
(21) Application number: 24856301.7
(22) Date of filing: 06.08.2024
(51) Int. Cl.: F04B 37/18, F04B 39/00, F04B 39/06, F04B 49/10

(54) **COMPRESSOR UNIT**

(30) Priority: 22.08.2023 JP 2023134820
(71) Applicant: KABUSHIKI KAISHA KOBE SEIKO SHO (KOBE STEEL, LTD.), Hyogo 651-8585 (JP)
(72) Inventor: NAGURA, Kenji, Takasago-shi, Hyogo 676-8670 (JP)
(74) Representative: TBK
(86) International application number: PCT/JP2024/028161
(87) International publication number: WO 2025/041610

(57) **Abstract**

A compressor unit includes a compression stage that compresses hydrogen gas as boil-off gas from a liquid hydrogen storage tank. The compression stage includes a cylinder unit, a piston, a piston rod that connects the piston to a crank mechanism, a cover part disposed outside the cylinder unit, a nitrogen gas supply unit that supplies nitrogen gas to a heat insulation space between the cover part and the cylinder unit, and a control unit that controls the nitrogen gas supply unit so that nitrogen gas is supplied into the heat insulation space while the compression stage compresses hydrogen gas.

## Description

### Technical Field

The present invention relates to a reciprocating compressor unit.

### Background Art

In recent years, in consideration of the environment, use of hydrogen for power generation, fuel for automobiles, and the like is considered, and demand for hydrogen is increasing. Further, conventionally, low-temperature boil-off gas (BOG) such as liquefied natural gas (LNG) and liquid hydrogen (LH2) is recovered by a compressor and supplied to demand destinations such as drive facilities or power generation facilities. In particular, boil-off gas generated from LH2 has extremely low temperature. For this reason, if a configuration in which the compressor directly suctions boil-off gas is employed, restrictions, such as it is necessary to select a material suitable for cryogenic temperature, employ design conditions that take into account the amount of thermal deformation, and implement strict heat insulation treatment, will be imposed.

In that connection, the following problem is pointed out in Patent Literature 1. "In recent years, hydrogen has been attracting attention as a new energy source. When hydrogen is used as an energy source, it is assumed that hydrogen will be stored and transported in a liquefied state, like natural gas. However, hydrogen has the property that the liquefaction temperature is lower than the liquefaction temperature of air. Therefore, if facilities such as reciprocating compressors for natural gas and other gases are applied to hydrogen as is, there is a possibility of a trouble caused by cryogenic liquid hydrogen. For example, this may generate liquefied air around the apparatus that supplies liquid hydrogen or boil-off gas thereof."

As described above, the problem of preventing troubles caused by cryogenic liquid hydrogen is studied. Specifically, a container part forming a vacuum region is formed around the compression part. However, in order to maintain the vacuum state, sealing means is required at a lid for internal inspection, a connection part with a portion where gas enters and exits the compression part, and the like in the container part. In addition, since the inside of the container part is in a vacuum state, strength (plate thickness) and reinforcement necessary to withstand the differential pressure between the external pressure (atmospheric pressure) and the internal pressure are also required. Therefore, maintainability is sacrificed. In addition, various measures such as providing a pedestal of a portion supporting the cylinder inside the container part are required.

### Citation List

### Patent Literature

Patent Literature 1: JP 2020-172870 A

### Summary of Invention

A main object of the present invention is to eliminate liquefaction of oxygen, which is one of main components of air and also serves as a combustion supporting gas, and to improve maintainability in a reciprocating compressor.

A compressor unit according to one aspect of the present invention is a reciprocating compressor unit that recovers hydrogen gas as boil-off gas from a liquid hydrogen storage tank and supplies at least part of the hydrogen gas to a demand destination including at least one of an engine, a power generation facility, or a boiler, the compressor unit including: a compression stage configured to compress hydrogen gas flowing out of the liquid hydrogen storage tank and flowing through a suction channel; and a crank mechanism configured to drive the compression stage. The compression stage includes a cylinder unit, a piston, a cover part disposed outside the cylinder unit, a nitrogen gas supply unit configured to be able to supply nitrogen gas to a heat insulation space between the cover part and the cylinder unit, and a nitrogen gas discharge unit configured to be able to discharge nitrogen gas from the heat insulation space. The compressor unit further includes a control unit that controls the nitrogen gas supply unit so that nitrogen gas is supplied into the heat insulation space while the compression stage compresses hydrogen gas.

### Brief Description of Drawings

FIG. 1 is a diagram schematically illustrating a configuration of a compressor unit according to a first embodiment.
FIG. 2 is a diagram schematically illustrating a configuration of a compressor unit according to a variation of the first embodiment.
FIG. 3 is a diagram schematically illustrating a configuration of a compressor unit according to a variation of the first embodiment.
FIG. 4 is a diagram schematically illustrating a configuration of a compressor unit according to a second embodiment.
FIG. 5 is a diagram schematically illustrating a configuration of a compressor unit according to a variation of the second embodiment.

### Description of Embodiments

Hereinafter, embodiments will be described with reference to the accompanying drawings. The embodiments below are each an example embodying the present invention, and are not intended to limit the technical scope of the present invention.

### (First Embodiment)

A compressor unit according to the present embodiment is configured to recover hydrogen gas as boil-off gas, from a liquid hydrogen storage tank, compress the recovered hydrogen gas, and supply the compressed hydrogen gas to a demand destination. Therefore, it is possible to efficiently supply hydrogen gas. The boil-off gas, which is hydrogen gas, is about -253°C. As the demand destination, at least one of an engine, a power generation facility, or a boiler is included. However, the demand destination may also include, in addition thereto, for example, facilities such as a gas combustion facility, a flare facility, and a vent that are other than facilities utilizing gas as an energy source. The hydrogen gas discharged from the compressor unit does not necessarily need to be supplied directly to the demand destination. Therefore, for example, after being filled in a cylinder or the like, the hydrogen gas may be supplied to the demand destination, by using various means such as transportation of the cylinder or through gas piping connected to the cylinder.

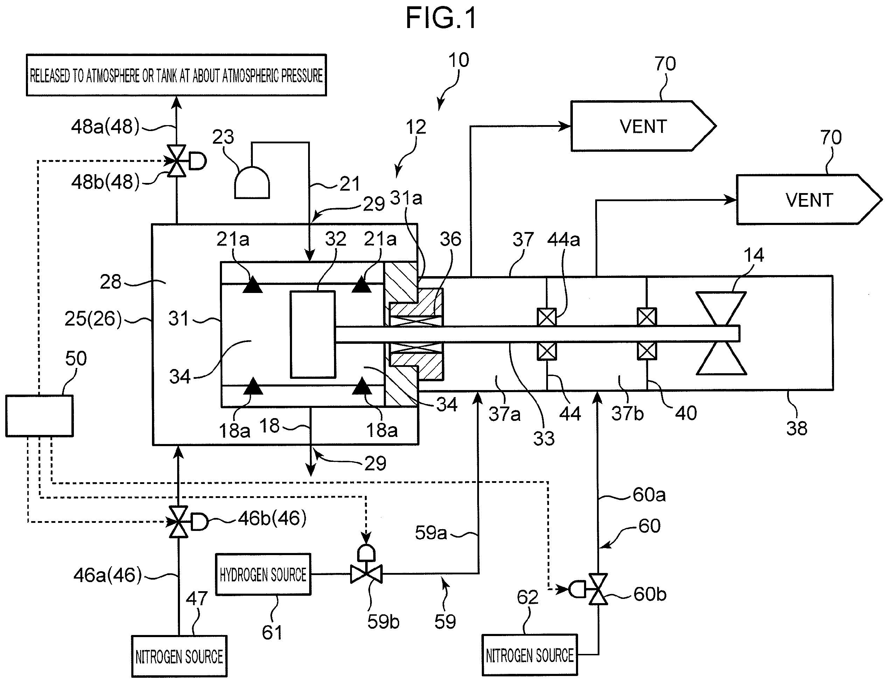

As illustrated in FIG. 1, a compressor unit 10 includes a compression stage 12 for compressing the hydrogen gas and a crank mechanism 14 that drives the compression stage 12. Hydrogen gas compressed by the compression stage 12 is discharged to a discharge channel 18. The hydrogen gas compressed by the compression stage 12 and flowing through the discharge channel 18 is supplied to a demand destination (not illustrated).

A compression stage (not illustrated) on a subsequent stage side may be further provided on the discharge side of the compression stage 12. In this case, hydrogen gas compressed by the compression stage 12 and then further compressed by the compression stage on the subsequent stage is sent to the demand destination.

The compression stage 12 is connected to a liquid hydrogen storage tank 23 via a suction channel 21. Therefore, the boil-off gas (BOG) that is generated inside the liquid hydrogen storage tank 23 from a liquefied gas is suctioned into the compression stage 12 through the suction channel 21. Note that the suction channel 21 does not need to be directly connected to the liquid hydrogen storage tank 23 as long as the boil-off gas generated in the liquid hydrogen storage tank 23 flows.

The compression stage 12 includes a reciprocating compression mechanism. That is, the compression stage 12 includes a cylinder unit 31, a piston 32 disposed inside the cylinder unit 31, and a piston rod 33 connected to the piston 32. The piston rod 33 is connected to the crank mechanism 14. By the piston 32 reciprocating inside the cylinder unit 31, the hydrogen gas is compressed inside a compression chamber 34 in the cylinder unit 31.

The compression stage 12 may be a horizontal type in which the piston 32 slides in the horizontal direction. In this case, a suction valve 21a is located on the upper side in the direction of gravity, the suction valve 21a being provided between a portion of the cylinder unit 31 to which the suction channel 21 is connected and the compression chamber 34. A discharge valve 18a is located on the lower side in the direction of gravity, the discharge valve 18a being provided between the compression chamber 34 and a portion of the cylinder unit 31 to which the discharge channel 18 is connected. The compression stage 12 may be a vertical type in which the piston 32 slides in the vertical direction.

FIG. 1 illustrates the compression stage 12 having a double acting structure, but the compression stage 12 may also employ a single acting structure. Further, the compression stage 12 does not necessarily have to have a structure having one cylinder, and may have a structure having a plurality of compression stages in parallel. That is, the compression stage 12 may be configured such that the hydrogen gas is compressed and pressurized by the piston 32 inside each of the plurality of cylinder units 31 connected in parallel.

A cover part 25 is disposed outside the cylinder unit 31 so as to form a space with the cylinder unit 31. In the present embodiment, the cover part 25 is configured by an outer cylinder member 26 that forms a space with the cylinder unit 31 by being fixed to the cylinder unit 31.

The outer cylinder member 26 is formed of a member that is not easily deformed, such as a metal member. By attaching the outer cylinder member 26 to the cylinder unit 31, a space having a predetermined size is formed around the cylinder unit 31. Nitrogen gas is introduced into this space as described later. Therefore, this space functions as a heat insulation space 28 for removing oxygen around the cylinder unit 31 and thermally shielding from the outside air (atmosphere). That is, the heat insulation space 28 is provided around the portion forming the compression chamber 34, whereby it is possible to prevent oxygen in the outside air from being liquefied around the cylinder unit 31. Since the outer cylinder member 26 is a member that is not easily deformed, the shape of the heat insulation space 28 is maintained in a predetermined shape.

The outer cylinder member 26 is attached to, for example, a rear head 31a that is a part of the cylinder unit 31. However, the outer cylinder member 26 is not necessarily fixed to the rear head 31a, and may be attached to any portion of the cylinder unit 31 as long as the heat insulation space 28 can be formed.

The outer cylinder member 26 is provided with an opening through which a pipe (a pipe connected to the cylinder unit 31) forming the discharge channel 18 passes, and is provided with an opening through which a pipe (a pipe connected to the cylinder unit 31) forming the suction channel 21 passes. A gap or a hole (hereinafter, referred to as a "leakage part 29") is intentionally provided between the pipe and the opening. The outer cylinder member 26 is also provided with an opening (not illustrated) through which the support of the cylinder unit 31 passes. The leakage part 29 is also intentionally provided between the support and the opening. In the compression stage 12, the leakage part 29 functions as a nitrogen gas discharge unit that discharges the nitrogen gas inside the heat insulation space 28 together with the discharge passage part 48 described later. Note that another leakage part (not illustrated) through which the nitrogen gas inside is appropriately discharged may be added to the outer cylinder member 26.

The compression stage 12 includes a rod packing part 36 provided in the cylinder unit 31, a hollow adapter part 37 disposed adjacent to the cylinder unit 31 and connected to the cylinder unit 31, and a crankcase 38 that accommodates a crankshaft which is a part of the crank mechanism 14.

The adapter part 37 is formed in a tubular shape, and the piston rod 33 is disposed in a space in the adapter part 37. One end of the adapter part 37 in the longitudinal direction is connected to the cylinder unit 31. The other end of the adapter part 37 in the longitudinal direction is connected to the crankcase 38. At this other end, a partition wall 40 is provided to separate the internal space of the adapter part 37 from the space inside the crankcase 38.

The rod packing part 36 is fixed to the rear head 31a. The rod packing part 36 is provided to prevent the hydrogen gas in the compression chamber 34 from leaking out of the cylinder unit 31 through the space between the rear head 31a and the piston rod 33.

The adapter part 37 includes a partition part 44 that partitions the internal space into a space on the compression chamber 34 side (or a first space 37a) and a space on the crank mechanism 14 side (or a second space 37b). The piston rod 33 also penetrates the partition part 44. A seal part 44a is provided at the peripheral edge of the through hole that allows the piston rod 33 to penetrate in the partition part 44.

The compression stage 12 includes a nitrogen gas supply unit 46 that supplies nitrogen gas to the heat insulation space 28. The nitrogen gas supply unit 46 includes a supply path 46a fixed to the outer cylinder member 26 so as to open to the heat insulation space 28, and a supply valve 46b that is a valve disposed on the supply path 46a. The supply path 46a is connected to a nitrogen gas source 47, and receives supply of nitrogen gas from the nitrogen gas source 47. The supply valve 46b is configured by, for example, an on-off valve that opens and closes based on a command from a control unit 50 described later.

The compression stage 12 includes a discharge passage unit 48 that discharges nitrogen gas from the heat insulation space 28. The discharge passage unit 48 includes a discharge pipe 48a fixed to the outer cylinder member 26 so as to open to the heat insulation space 28, and a discharge valve 48b which is a valve disposed on the discharge pipe 48a. The discharge pipe 48a may be open to the atmosphere, or may be connected to a tank (not illustrated) having an internal pressure of about atmospheric pressure. The discharge pipe 48a also functions as a pressure equalizing means for making a pressure of the heat insulation space 28 substantially equal to the atmospheric pressure. The leakage part 29 is also a part of the pressure equalizing means.

The discharge valve 48b is configured by, for example, an on-off valve that opens and closes based on a command from a control unit 50 described later. The discharge valve 48b may be omitted.

The compression stage 12 includes a hydrogen gas supply unit 59 that supplies hydrogen gas to the first space 37a in the adapter part 37, and a nitrogen supply unit 60 that supplies nitrogen gas to the second space 37b in the adapter part 37. That is, the hydrogen gas supply unit 59 supplies hydrogen gas to the space closest to the compression chamber 34 among the plurality of spaces of the adapter part 37. Therefore, during driving of the compression stage 12, hydrogen gas exists in the space closest to the compression chamber 34. The nitrogen supply unit 60 supplies the nitrogen gas to the space closest to the crank mechanism 14 among the plurality of spaces of the adapter part 37. Therefore, during the driving of the compression stage 12, the nitrogen gas exists in the space closest to the crank mechanism 14.

The hydrogen gas supply unit 59 includes a hydrogen channel 59a connected to a hydrogen gas source 61. The hydrogen gas source 61 accommodates the hydrogen gas at room temperature. The hydrogen channel 59a is connected to the outer peripheral wall that forms the first space 37a in the adapter part 37. The hydrogen gas supply unit 59 supplies the hydrogen gas from the hydrogen gas source 61 to the first space 37a inside the adapter part 37 through the hydrogen channel 59a. Therefore, it can be said that the temperature of the hydrogen gas in the first space 37a is higher than the liquefaction temperature of the nitrogen gas in the second space 37b.

The nitrogen supply unit 60 includes a nitrogen channel 60a connected to a nitrogen gas source 62. The nitrogen channel 60a is connected to the outer peripheral wall that forms the second space 37b in the adapter part 37. The nitrogen supply unit 60 supplies the nitrogen gas from the nitrogen gas source 62 to the second space 37b inside the adapter part 37 through the nitrogen channel 60a. The nitrogen gas source 62 accommodates the nitrogen gas at room temperature.

The hydrogen channel 59a of the hydrogen gas supply unit 59 is provided with a hydrogen valve 59b, which is a valve that adjusts the pressure of the hydrogen gas flowing through the hydrogen channel 59a. The nitrogen channel 60a is provided with a nitrogen valve 60b, which is a valve that adjusts the pressure of the nitrogen gas flowing through the nitrogen channel 60a.

The hydrogen gas in the first space 37a and the nitrogen gas in the second space 37b are discharged to a vent 70. The hydrogen gas in the first space 37a and the nitrogen gas in the second space 37b may be recovered in a predetermined tank or may be returned to the hydrogen gas source 61 and the nitrogen gas source 62, respectively.

The supply valve 46b and the discharge valve 48b are communicably connected to the control unit 50. The control unit 50 controls the supply valve 46b and the discharge valve 48b so that the supply valve 46b and the discharge valve 48b are opened when the piston 32 is driven by the crank mechanism 14, and the supply valve 46b and the discharge valve 48b are closed when the piston 32 is stopped. That is, the control unit 50 performs control to open the supply valve 46b and the discharge valve 48b on the basis of a signal for driving the crank mechanism 14.

The hydrogen valve 59b and the nitrogen valve 60b are also communicably connected to the control unit 50. The control unit 50 controls the hydrogen valve 59b and the nitrogen valve 60b so that the hydrogen valve 59b and the nitrogen valve 60b are opened when the piston 32 is driven and the hydrogen valve 59b and the nitrogen valve 60b are closed when the piston 32 is stopped.

Here, operation of the compressor unit 10 will be described. In the compressor unit 10, when the crank mechanism 14 operates, the piston 32 operates, hydrogen gas as boil-off gas is suctioned into the compression chamber 34 from the suction channel 21, and the hydrogen gas is compressed.

While the crank mechanism 14 is being driven, the supply valve 46b, the discharge valve 48b, the hydrogen valve 59b, and the nitrogen valve 60b are opened. Therefore, during the operation of the piston 32, the nitrogen gas is constantly or intermittently supplied from the nitrogen gas supply unit 46 to the heat insulation space 28. The nitrogen gas in the heat insulation space 28 is mainly released into the atmosphere through the discharge passage unit 48, and is also released into the atmosphere from the leakage part 29. As described above, while the compression stage 12 compresses the hydrogen gas, the nitrogen gas continues to flow through the heat insulation space 28. Thus, the oxygen gas around the cylinder unit 31 existing before the compressor unit 10 is driven is discharged from the heat insulation space 28 so that the oxygen gas is prevented from being liquefied. Furthermore, the nitrogen gas is prevented from being cooled and liquefied.

While the crank mechanism 14 is driven, the hydrogen gas is supplied to the first space 37a in the adapter part 37 by the hydrogen gas supply unit 59, and the nitrogen gas is supplied to the second space 37b in the adapter part 37 by the nitrogen supply unit 60. Therefore, the nitrogen gas in the second space 37b is prevented from being mixed into the hydrogen gas in the compression chamber 34 through the rod packing part 36.

As described above, in the present embodiment, since the heat insulation space 28 between the cover part 25 and the cylinder unit 31 is filled with the nitrogen gas, the oxygen concentration of air can be reduced as much as possible in the heat insulation space 28. Therefore, since the air (outside air) around the cylinder unit 31 can be prevented from being cooled by the boil-off gas (suction gas) of liquid hydrogen which is a low-temperature gas, it is possible to prevent oxygen which is a combustion supporting gas from being liquefied.

While the compression stage 12 compresses the hydrogen gas, the nitrogen gas continues to be discharged from the heat insulation space 28 through the discharge passage unit 48 and the leakage part 29 which are various nitrogen gas discharge units. Therefore, it is also possible to prevent the nitrogen gas from being cooled and liquefied.

Since the nitrogen gas discharge unit (or the discharge passage unit 48, the leakage part 29) also functions as a pressure equalizing means, the pressure inside and outside the heat insulation space 28 is equalized. As a result, maintainability is improved as compared with a configuration in which the inside of the heat insulation space 28 is maintained in a vacuum state. That is, since it is not necessary to bring the heat insulation space 28 into a vacuum state, it is not necessary to attach equipment for making the heat insulation space 28 vacuum. Furthermore, it is not necessary to adopt a plate material having a thickness required to receive the differential pressure as the plate material of the outer cylinder member 26. It is not necessary to provide a large number of bolts in the opening portion provided in the outer cylinder member 26 so as to contain the pressure. In addition, since a sealing function is not required, weight reduction can be achieved, and a simplified structure such as a bolt and a seal can be adopted. Therefore, maintainability is improved, and it is possible to easily cope with an increase in size.

In the present embodiment, the adapter part 37 includes the partition part 44, which can more reliably prevent contact between the low-temperature boil-off gas (suction gas) and the nitrogen gas. Furthermore, the temperature of the hydrogen gas in the first space 37a which is the space on the compression chamber 34 side is higher than the liquefaction temperature of the nitrogen gas in the second space 37b which is the space on the crank mechanism 14 side, thereby preventing the liquefaction of the nitrogen gas.

In the present embodiment, the compression stage 12 may be a horizontal type. In this case, when the lower side is the suction side, the support portion of the cylinder unit 31 is provided on the suction side having a low temperature. In this case, the influence of freezing and thermal shrinkage around the support portion may increase. Further, even if nitrogen is liquefied on the outer surface of the cylinder unit 31, the liquid is gasified by flowing to the discharge side having a high temperature on the lower side. On the other hand, in the configuration in which the suction valve 21a is located on the upper side in the direction of gravity, the support portion is provided on the discharge side where the temperature is higher. Therefore, the influence of freezing and thermal shrinkage can be reduced.

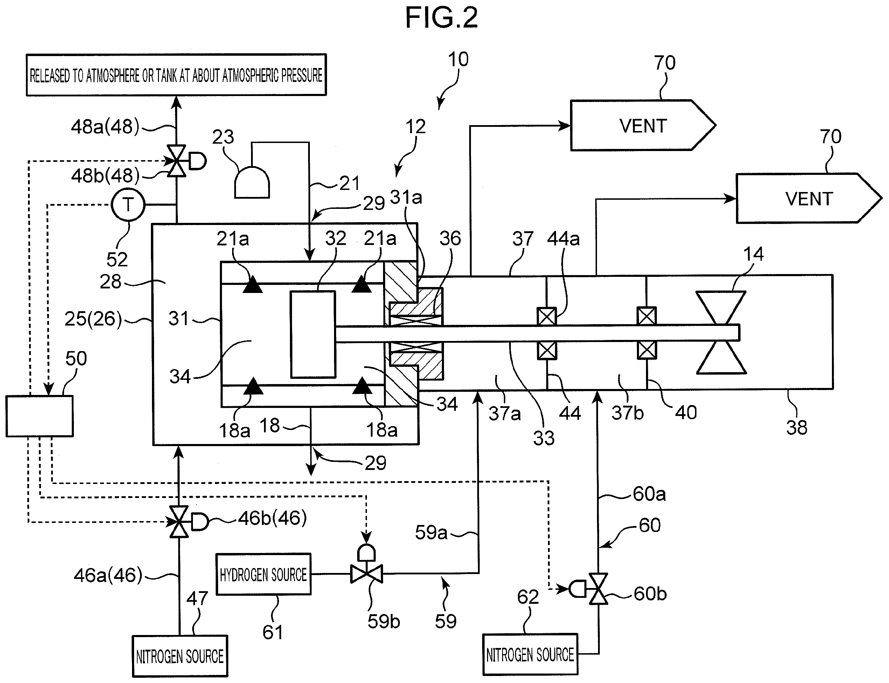

In the present embodiment, the supply valve 46b is configured as an on-off valve, but the present embodiment is not limited thereto, and may be configured as an electric valve whose opening degree is adjustable. In this case, as illustrated in FIG. 2, a temperature sensor 52 that detects the temperature of the nitrogen gas in the discharge pipe 48a of the discharge passage unit 48 or the temperature of the nitrogen gas in the heat insulation space 28 may be provided. When the temperature sensor 52 is provided to detect the temperature of the nitrogen gas in the heat insulation space 28, the temperature sensor 52 is preferably disposed in the vicinity of the suction channel 21 or the suction valve 21a so as to be able to detect the temperature of the nitrogen gas in the vicinity of the suction channel 21 or the suction valve 21a in the heat insulation space 28.

The control unit 50 may be configured to control the supply valve 46b so as to change the opening degree of the supply valve 46b based on the temperature detected by the temperature sensor 52. Specifically, the control unit 50 controls the supply valve 46b so as to increase the supply amount of nitrogen gas to the heat insulation space 28 when the temperature detected by the temperature sensor 52 is equal to or lower than a threshold (that is, set based on the liquefaction temperature of the nitrogen gas) expected from the liquefaction temperature of nitrogen gas. That is, when the nitrogen gas in the discharge pipe 48a or the nitrogen gas in the heat insulation space 28 can be liquefied, the nitrogen gas supply unit 46 supplies a larger flow rate of the nitrogen gas to the heat insulation space 28. This makes it possible to prevent liquefaction of the nitrogen gas.

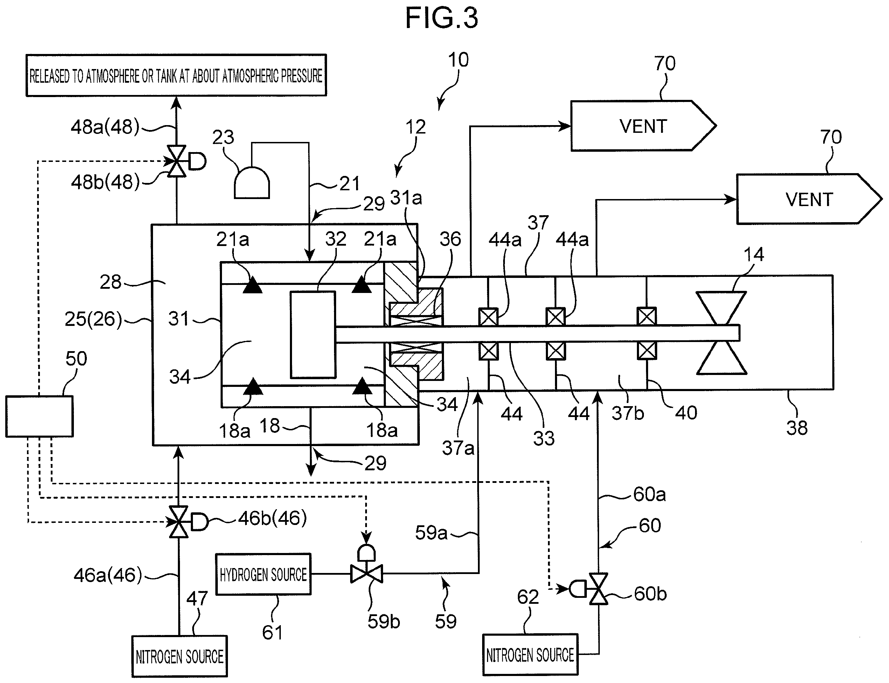

In the present embodiment, as illustrated in FIG. 1, one partition part 44 is provided in the adapter part 37, but the present embodiment is not limited thereto. As illustrated in FIG. 3, two partition parts 44 may be provided, or more partition parts 44 may be provided.

In the present embodiment, it is not necessary to actively provide the leakage part 29 as long as the nitrogen gas is sufficiently discharged by the discharge passage unit 48. In addition, by adjusting the size or number of the leakage parts 29, it is possible to function as a nitrogen gas leakage part and a pressure equalizing means, and thus, it is also possible to omit the discharge passage unit 48.

### (Second Embodiment)

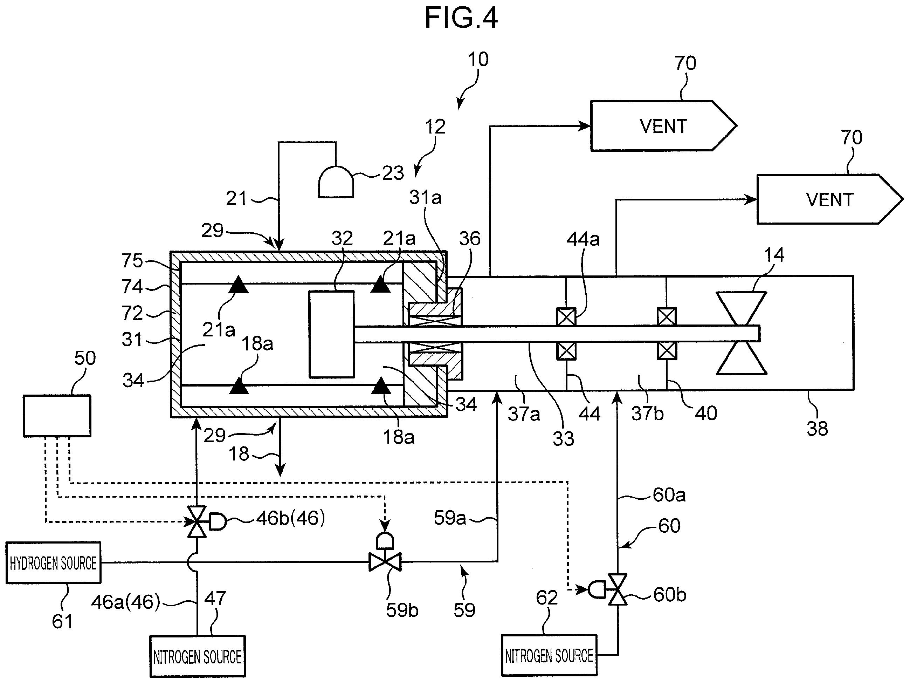

In the first embodiment, the cover part 25 is formed of the outer cylinder member 26 made of a material that is not easily deformed, whereas in the second embodiment, as illustrated in FIG. 4, the cover part 25 is formed of a sheet member 74 that covers a heat insulating material 72 attached to the cylinder unit 31. Note that, here, the same constituent elements as those of the first embodiment are denoted by the same reference numerals, and detailed description thereof will be omitted.

In the second embodiment, the heat insulating material 72 is provided to cover the cylinder unit 31. The heat insulating material 72 can be arbitrarily wound around the cylinder unit 31. The heat insulating material 72 is a cotton-like or sponge-like member such as glass wool, and is disposed to cover the entire outer surface of the cylinder unit 31, thereby making it difficult for heat of the outside air to be transferred to the cylinder unit 31. The heat insulating material 72 is wound around the cylinder unit 31 and fixed by a band (not illustrated). In addition, the heat insulating material 72 may be molded in advance, or a molded material may be used in combination.

The sheet member 74 covering the heat insulating material 72 is made of a material that is lighter and softer than the outer cylinder member 26 made of metal or the like. That is, the sheet member 74 only needs to have a function of preventing the heat insulating material 72 from being exposed to the outside, and thus does not need to be a rigid member capable of forming a space having a predetermined size by itself.

A moisture-proof sheet 75 may be provided inside the heat insulating material 72. That is, the moisture-proof sheet 75 may be wound around the outer surface of the cylinder unit 31, and the heat insulating material 72 may be provided to cover the moisture-proof sheet 75. The moisture-proof sheet 75 may be further disposed on the heat insulating material 72, and the heat insulating material 72 may be further disposed outside the moisture-proof sheet 75. In this case, the sheet member 74 is provided so as to cover the outer heat insulating material 72. That is, the moisture-proof sheet 75 and the heat insulating material 72 may have a multiple structure.

In the second embodiment, nitrogen gas is supplied to the space inside the sheet member 74, and the heat insulating material 72 is disposed in the space. Therefore, the space inside the sheet member 74 functions as the heat insulation space 28 for thermally insulating the cylinder unit 31 from the outside air.

The sheet member 74 has waterproofness. Further, the sheet member 74 may have air permeability for discharging the nitrogen gas in the heat insulation space 28.

The sheet member 74 is provided with an opening through which a pipe forming the discharge channel 18 passes and an opening through which a pipe forming the suction channel 21 passes. A leakage part 29 (that is, hole or gap) is intentionally provided between these pipes and the opening. Note that a leakage part may be added to the sheet member 74 at a location other than the opening.

In the compressor unit 10, while the compression stage compresses the hydrogen gas, the nitrogen gas is constantly or intermittently supplied from the nitrogen gas supply unit 46 to the heat insulation space 28. The nitrogen gas in the heat insulation space 28 is released from the leakage part 29 into the atmosphere. When the sheet member 74 has air permeability, nitrogen gas can be discharged through the entire sheet member 74. In this case, the sheet member 74 itself functions as a nitrogen gas discharge unit. As described above, since the oxygen gas existing around the cylinder unit 31 before the compressor unit 10 is driven is discharged from the heat insulation space 28 by the nitrogen gas continuously flowing through the heat insulation space 28, the oxygen gas is prevented from being liquefied. Furthermore, the nitrogen gas is also prevented from being cooled and liquefied.

In the compressor unit 10, by adjusting the size or the number of the leakage parts 29 and adopting the sheet member 74 having high air permeability, the leakage parts 29 and the sheet member 74 themselves can function as nitrogen gas leakage parts, and can also function as a pressure equalizing means for making a pressure of the heat insulation space 28 substantially equal to the atmospheric pressure.

In the present embodiment, the cover part 25 is constituted by the sheet member 74 disposed to cover the heat insulating material 72. Therefore, as compared with the case where the cover part 25 is configured by the outer cylinder member 26 fixed to the cylinder unit 31, it is possible to reduce the load of the attaching and detaching work at the time of maintenance or the like, and it is possible to easily cope with an increase in size in which the shape of the cylinder unit 31 becomes complicated. That is, as compared with the case where the cover part 25 is formed of the outer cylinder member 26 made of metal, the weight of the member forming the cover part 25 can be reduced, and the maintainability is improved. In addition, since the work of covering the heat insulating material 72 with the sheet member 74 can be performed manually, the load at the time of attachment and detachment work can be reduced. Therefore, the load of maintenance work on the cylinder unit 31 can also be reduced. Note that the sheet member 74 may be made of a material having no air permeability as long as the nitrogen gas can be sufficiently discharged by the leakage part 29.

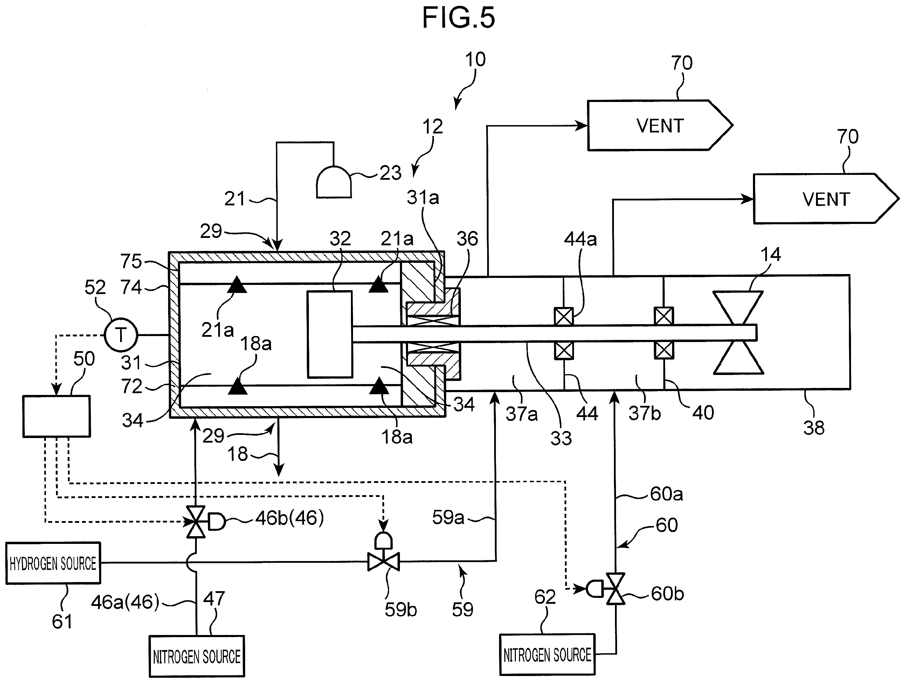

Also in the present embodiment, similarly to the first embodiment, the supply valve 46b may be configured by an electric valve whose opening degree is adjustable. In this case, as illustrated in FIG. 5, a temperature sensor 52 that detects the temperature of the nitrogen gas in the discharge pipe 48a of the discharge passage unit 48 or the temperature of the nitrogen gas in the heat insulation space 28 may be provided. The control unit 50 is configured to control the supply valve 46b so as to change the opening degree of the supply valve 46b based on the temperature detected by the temperature sensor 52. Specifically, the control unit 50 controls the supply valve 46b so as to increase the supply amount of nitrogen gas to the heat insulation space 28 when the temperature detected by the temperature sensor 52 is equal to or lower than a threshold (that is, set based on the liquefaction temperature of the nitrogen gas) assumed from the liquefaction temperature of nitrogen gas. That is, when the nitrogen gas in the discharge pipe 48a or the nitrogen gas in the heat insulation space 28 can be liquefied, the nitrogen gas supply unit 46 supplies a larger flow rate of the nitrogen gas to the heat insulation space 28. This makes it possible to prevent liquefaction of the nitrogen gas.

Although other configurations, operations, and effects are not described, the description of the first embodiment can be applied to the second embodiment. In addition, the present invention is not limited to the above embodiment, and various changes, improvements, and the like can be made without departing from the gist of the present invention.

Here, the above embodiments will be outlined.
(1) A compressor unit according to the present embodiment is a reciprocating compressor unit that recovers hydrogen gas as boil-off gas from a liquid hydrogen storage tank and supplies at least part of the hydrogen gas to a demand destination including at least one of an engine, a power generation facility, or a boiler, the compressor unit including: a compression stage configured to compress hydrogen gas flowing out of the liquid hydrogen storage tank and flowing through a suction channel; and a crank mechanism configured to drive the compression stage. The compression stage includes a cylinder unit, a piston, a cover part disposed outside the cylinder unit, a nitrogen gas supply unit configured to be able to supply nitrogen gas to a heat insulation space between the cover part and the cylinder unit, and a nitrogen gas discharge unit configured to be able to discharge nitrogen gas from the heat insulation space. The compressor unit further includes a control unit that controls the nitrogen gas supply unit so that nitrogen gas is supplied into the heat insulation space while the compression stage compresses hydrogen gas.

In the compressor unit, since the heat insulation space between the cover part and the cylinder unit is filled with the nitrogen gas, the oxygen concentration of the air in the heat insulation space can be reduced as much as possible. Therefore, it is possible to prevent oxygen which is a combustion supporting gas from being liquefied by the air (outside air) around the cylinder unit being cooled by the boil-off gas (suction gas) of liquid hydrogen which is a low-temperature gas.

In addition, maintainability is improved as compared with a compressor disclosed in Patent Literature 1 in which a vacuum pump or the like is connected to a space between the cylinder unit and the container part to be in a vacuum state every time a part of the container part is opened for inspection and maintenance of the cylinder unit. That is, in the compressor unit according to the present embodiment, since it is not necessary to bring the heat insulation space into a vacuum state, it is not necessary to attach equipment for making the heat insulation space vacuum.

(2) The compressor unit may further include a pressure equalizing means for making an inside of the heat insulation space substantially equal to atmospheric pressure.

In this aspect, the heat insulation space always has a substantially atmospheric pressure. For this reason, it is not necessary to adopt a plate material having a thickness required for handling the differential pressure as the cover part. In addition, it is not necessary to provide a large number of bolts in the opening provided in the cover part so as to contain the pressure. In addition, no sealing function is required. Therefore, weight reduction can be achieved, and a simplified structure such as a bolt and a seal can be adopted. Therefore, maintainability is improved, and it is possible to easily cope with an increase in size.

(3) The cover part may be formed of an outer cylinder member made of metal fixed to the cylinder unit such that formation of the heat insulation space is maintained in a predetermined shape.

In this aspect, since the cover part is formed of the outer cylinder member fixed to the cylinder unit, the shape of the heat insulation space is maintained in a predetermined shape.

(4) The nitrogen gas discharge unit may include a discharge passage unit having a discharge pipe fixed to the outer cylinder member so as to open to the heat insulation space and a discharge valve that is a valve disposed in the discharge pipe.

In this aspect, the nitrogen gas continues to flow through the heat insulation space while the compression stage compresses the hydrogen gas, so that the nitrogen gas can be prevented from being cooled and liquefied.

(5) The compressor unit may further include a temperature sensor configured to detect a temperature of nitrogen gas in the discharge passage unit. In this case, the control unit may control the nitrogen gas supply unit so that a supply amount of nitrogen gas increases when a temperature detected by the temperature sensor is equal to or lower than a threshold assumed from a liquefaction temperature of nitrogen gas.

In this aspect, the liquefaction of the nitrogen gas can be more reliably prevented, and the consumption of excessive nitrogen can be suppressed.

(6) The compressor unit may further include a cotton-like or sponge-like heat insulating material. In this case, the cover part may be formed of a sheet member disposed to cover the heat insulating material, and nitrogen gas may be supplied into the heat insulation space inside the sheet member by the nitrogen gas supply unit.

In this aspect, as in the case where the cover part is constituted by the outer cylinder member fixed to the cylinder unit, a container-shaped outer cylinder member that covers the cylinder unit is not required. Therefore, it is possible to reduce the load of the attachment/detachment work at the time of maintenance or the like, and it is possible to easily cope with an increase in size. That is, as compared with the case where the cover part is formed of the outer cylinder member made of metal, the weight of the member forming the cover part can be reduced, and the maintainability is improved. Although the inside of the sheet member covering the heat insulating material functions as a heat insulation space, the heat insulation space is not limited to a sealed space.

(7) The cover part may have air permeability. In this aspect, since the nitrogen gas in the heat insulation space can be appropriately discharged to the outside, the sheet member can be prevented from swelling.

(8) The compressor unit may further include a temperature sensor configured to detect a temperature of nitrogen gas in the heat insulation space. In this case, the control unit may control the nitrogen gas supply unit so that a supply amount of nitrogen gas increases when a temperature detected by the temperature sensor is equal to or lower than a threshold assumed from a liquefaction temperature of nitrogen gas.

In this aspect, the liquefaction of the nitrogen gas can be more reliably prevented, and the consumption of excessive nitrogen can be suppressed.

(9) The compression stage may further include an adapter part connecting the cylinder unit and a case of the crank mechanism, and the adapter part may include at least one partition part that partitions a space inside the adapter part into a plurality of spaces. In this case, hydrogen gas may exist in a space closest to a compression chamber among the plurality of spaces, nitrogen gas may exist in a space closest to the crank mechanism among the plurality of spaces, and a temperature of hydrogen gas in the space closest to the compression chamber may be higher than a liquefaction temperature of nitrogen gas in the space closest to the crank mechanism.

In this aspect, the adapter part includes the partition part, which can more reliably prevent contact between the low-temperature boil-off gas (suction gas) and the nitrogen gas. In addition, the temperature of the hydrogen gas in the space on the compression chamber side is higher than the liquefaction temperature of the nitrogen gas in the space on the crank mechanism side, thereby preventing the liquefaction of the nitrogen gas.

(10) The compression stage may be a horizontal type in which the piston slides in a horizontal direction. In this case, the cylinder unit may include a suction valve that is located on an upper side in a direction of gravity, and a discharge valve that is located on a lower side in the direction of gravity.

When the lower side of the cylinder unit is the suction side, the support portion of the cylinder unit is provided on the suction side having a low temperature, and thus the influence of freezing and thermal shrinkage around the support portion may increase. Further, even if nitrogen is liquefied on the outer surface of the cylinder unit, the liquid is gasified by flowing to the discharge side having a high temperature on the lower side. On the other hand, in the configuration in which the suction valve is located on the upper side in the direction of gravity as in the present aspect, the support portion is provided on the discharge side where the temperature is high, so that the influence of freezing and thermal shrinkage can be reduced.

As described above, according to the present embodiment, liquefaction of oxygen, which is one of the main components of air and is also a combustion supporting gas, can be eliminated, and the reciprocating compressor can easily cope with maintainability.

This application is based on Japanese Patent Application No. 2023-134820 filed on August 22, 2023, the contents of which are incorporated herein by reference.

Although the present invention has been appropriately and sufficiently described through the embodiments with reference to the above drawings to express the present invention, it should be recognized that a person skilled in the art can easily modify and/or improve the above-described embodiments. Therefore, unless a change or improvement made by a person skilled in the art is at a level departing from the scope of rights of the claims described in claims, the change or improvement is interpreted to be included in the scope of rights of the claims.

## Claims

1. A reciprocating compressor unit that recovers hydrogen gas as boil-off gas from a liquid hydrogen storage tank and supplies at least part of the hydrogen gas to a demand destination including at least one of an engine, a power generation facility, or a boiler, the reciprocating compressor unit comprising:
a compression stage configured to compress hydrogen gas flowing out of the liquid hydrogen storage tank and flowing through a suction channel; and
a crank mechanism configured to drive the compression stage, wherein
the compression stage includes
a cylinder unit,
a piston,
a cover part disposed outside the cylinder unit,
a nitrogen gas supply unit configured to be able to supply nitrogen gas to a heat insulation space between the cover part and the cylinder unit, and
a nitrogen gas discharge unit configured to be able to discharge nitrogen gas from the heat insulation space,
the compressor unit further comprising a control unit that controls the nitrogen gas supply unit so that nitrogen gas is supplied into the heat insulation space while the compression stage compresses hydrogen gas.

2. The compressor unit according to claim 1, further comprising a pressure equalizing means for making an inside of the heat insulation space substantially equal to atmospheric pressure.

3. The compressor unit according to claim 1 or 2, wherein the cover part is formed of an outer cylinder member made of metal fixed to the cylinder unit such that formation of the heat insulation space is maintained in a predetermined shape.

4. The compressor unit according to claim 3, wherein the nitrogen gas discharge unit includes a discharge passage unit, the discharge passage unit having a discharge pipe fixed to the outer cylinder member so as to open to the heat insulation space and a discharge valve that is a valve disposed on the discharge pipe.

5. The compressor unit according to claim 4, further comprising a temperature sensor configured to detect a temperature of nitrogen gas in the discharge passage unit, wherein
the control unit controls the nitrogen gas supply unit so that a supply amount of nitrogen gas increases when a temperature detected by the temperature sensor is equal to or lower than a threshold assumed from a liquefaction temperature of nitrogen gas.

6. The compressor unit according to claim 1 or 2, further comprising a cotton-like or sponge-like heat insulating material, wherein
the cover part is formed of a sheet member disposed to cover the heat insulating material, and
nitrogen gas is supplied into the heat insulation space inside the sheet member by the nitrogen gas supply unit.

7. The compressor unit according to claim 6, wherein the cover part has air permeability.

8. The compressor unit according to claim 7, further comprising a temperature sensor configured to detect a temperature of nitrogen gas in the heat insulation space, wherein
the control unit controls the nitrogen gas supply unit so that a supply amount of nitrogen gas increases when a temperature detected by the temperature sensor is equal to or lower than a threshold assumed from a liquefaction temperature of nitrogen gas.

9. The compressor unit according to claim 1 or 2, wherein
the compression stage further includes an adapter part connecting the cylinder unit and a case of the crank mechanism,
the adapter part includes at least one partition part that partitions a space inside the adapter part into a plurality of spaces,
hydrogen gas exists in a space closest to a compression chamber among the plurality of spaces, and nitrogen gas exists in a space closest to the crank mechanism among the plurality of spaces, and
a temperature of hydrogen gas in the space closest to the compression chamber is higher than a liquefaction temperature of nitrogen gas in the space closest to the crank mechanism.

10. The compressor unit according to claim 1 or 2, wherein
the compression stage is a horizontal type in which the piston slides in a horizontal direction, and
the cylinder unit includes
a suction valve that is located on an upper side in a direction of gravity, and
a discharge valve that is located on a lower side in a direction of gravity.
